# EUROPÄISCHE PATENTSCHRIFT

(11) **EP 1 038 741 B1**
(45) Veröffentlichungstag und Bekanntmachung des Hinweises auf die Patenterteilung: **16.11.2005**
(21) Anmeldenummer: 00101153.5
(22) Anmeldetag: 21.01.2000
(51) Int. Cl.: B60T 1/06, B60G 17/052

(54) **Sattelzug**
Tractor-trailer combination
Combinaison camion semi-remorque

(30) Priorität: 19.03.1999 DE 19912316
(43) Veröffentlichungstag der Anmeldung: 27.09.2000
(73) Patentinhaber: DaimlerChrysler AG, 70567 Stuttgart (DE)
(72) Erfinder: Herffurth, Rainer, 34233 Fuldatal (DE)

## Beschreibung

Die Erfindung betrifft einen Sattelzug, der eine Zugmaschine und einen Sattelauflieger mit einem Mehrachsaggregat mit drei Achsen umfasst gemäß den Merkmalen des Oberbegriffs des Anspruchs 1.

Sattelzüge mit Mehrachsaggregaten sind u.a. aus der DE 196 32 515 A1 bekannt. Liftachsen sind u.a. in der DE 41 14 861 A1 vorbeschrieben. Bei Sattelzügen bis beispielsweise 40 t zulässigem Gesamtgewicht werden in der Regel Sattelauflieger mit Dreiachsfahrgestellen verwendet. Die einzelnen Achsen haben eine Einzelradbereifung. Bei diesen bekannten Mehrachsaggregaten werden generell alle Räder der Achsen mit Radbremsen ausgestattet. Die Bremsen von mindestens zwei Achsen der Mehrachsaggregate sind mit Federspeicherbremszylindern für die Nutzung als Feststellbremse ausgerüstet.

Die in der DE 196 32 515 A1 beschriebene Achse eines Sattelaufliegers hat pro Rad eine Scheibenbremse. Die verwendeten Scheibenbremsen sind erheblich kleiner dimensioniert als die Scheibenbremsen der Zugmaschine. Schließlich sind zumindest die dynamischen Radlasten des Zugfahrzeugs erheblich größer als die des Sattelaufliegers, wodurch sich dort ein geringerer Bremskraftbedarf ergibt.

Der vorliegenden Erfindung liegt die Problemstellung zugrunde, einen eine Zugmaschine und einen Sattelauflieger umfassenden Sattelzug anzugeben, dessen Sattelauflieger aufgrund einer besonderen Gestaltung der Bremsanlage eine geringere ungefederte Masse hat, mit weniger Wartungsaufwand auskommt, ein sicheres Fahrverhalten aufweist und zudem kostengünstiger zu fertigen, zu montieren und zu warten ist.

Das Problem wird mit den Merkmalen des Hauptanspruchs gelöst. Am Mehrachsaggregat des Sattelaufliegers sind bis auf eine Achse alle Achsen mit Bremsen ausgestattet, wobei die Bremsscheiben der bremsbaren Achsen des Mehrachsaggregats zumindest den gleichen wirksamen Reibradius wie die Bremsscheiben des Zugfahrzeugs aufweisen.

Für die Fahrzeugklasse 0₄ liegt die Mindestanforderung an die Bremsverzögerung bei 5,5 m/s². Um diese Bremsverzögerung beispielsweise in einem Sattelauflieger mit Dreiachsfahrgestell zu erreichen, reicht es aus, nur zwei von drei Achsen mit Scheibenbremsen auszustatten. Die dritte, ungebremste Achse hat die Funktion einer reinen Tragachse.

Bei dem Dreiachsaggregat können die gebremsten Achsen mit den kompletten Radbremsen eines Zugfahrzeugs ausgestattet werden, da die Bremsscheiben des Zugfahrzeugs und des Sattelaufliegers den gleichen wirksamen Reibradius aufweisen. Am Sattelauflieger übernehmen die beiden gebremsten Achsen die gesamte Bremsarbeit. In der Regel sind das die beiden vorderen Achsen des Dreiachsaggregats. Diese Gestaltung spart am Dreiachsaggregat zwei Radbremsen ein, wodurch die ungefederte Masse hier um ca. 250 kp gegenüber herkömmlichen Aggregaten verringert wird.

Zusätzlich ist der Wartungsaufwand kleiner, da zum einen zwei Bremsen weniger gewartet werden müssen und zum anderen am gesamten Fahrzeug - also bei der Zugmaschine und dem Sattelauflieger - alle Bremsen baugleich sind. Die Mechaniker können mit dem gleichen Wissen, den gleichen Handgriffen und den gleichen Werkzeugen die Bremsen überprüfen, warten oder Teile austauschen. Das wirkt sich auch positiv auf die Zuverlässigkeit der Prüf- und Wartungsarbeiten aus. Bei kürzeren Prüf- und Wartungszeiten erhöht sich sogar die Sicherheit der Bremsanlagen.

Zudem ergibt sich im Falle einer Störung in der Bremskraftregelung eine höhere Fahrsicherheit als bei Sattelzügen, deren Sattelauflieger konventionelle Mehrachsaggregate haben. Bei einem fehlerbedingten Überbremsen des Mehrachsaggregats führt beispielsweise bei einer ungebremsten Tragachse letztere den Sattelauflieger. Während die blockierten Räder der gebremsten Achsen rutschen, hält die Tragachse die Seitenführung, so daß der Sattelauflieger bzw. der Sattelzug in der Spur bleibt.

Da neben den Ersatzteilen auch die regulären Verschleißteile, wie zum Beispiel die Bremsbeläge und Bremsscheiben, bei allen Bremsen eines Sattelzuges baugleich sind, reduziert sich der Aufwand in der Lagerhaltung bei den Fuhrunternehmen, den Werkstätten und den Herstellern.

Die ungebremste Tragachse kann als Liftachse ausgebildet werden. Diese Achse kann bei sogenannten Leer- oder Volumentransportfahrten angehoben werden, um den Reifenverschleiß zu mindern und die Lenkbarkeit des Mehrachsaggregats zu verbessern. Wird die Liftachse ohne Radbremsen ausgestattet, so kann ihr Hub- und Verriegelungsmechanismus kleiner dimensoniert werden, da die ungebremste Liftachse gegenüber einer gebremsten um ca. 250 kp leichter ist. Die Liftachse ist hierbei die hintere Achse des Sattelaufliegers.

Die reine Tragachse kann auch als Lenkachse ausgebildet werden. In der Regel ist dazu nicht, wie bisher bei einer gebremsten Achse, die Rahmenbreite des Sattelaufliegers im Bereich dieser Achse zu ändern. Der Verzicht auf einen großvolumigen Bremszylinder ermöglicht u.a. auch einen vergleichsweise großen Radschwenkbereich. Die Lenkachse kann hierbei selbst- oder fremdgesteuert ausgeführt werden. Der Konstruktionsaufwand für die Herstellung der sonst so komplizierten Lenkachsen verringert sich durch das Weglassen der Scheibenbremsen erheblich.

Die Tragachse kann auch eine kombinierte Lenk- und Liftachse sein. Zumindest die Tragachsen haben keine Zwillingsbereifung.

Die Scheibenbremsen werden im allgemeinen pneumatisch betätigt. Alternativ können sie auch hydraulisch oder über einen hydropneumatischen Druckübersetzer betätigt werden.

Mindestens eine der mittels Scheibenbremsen bremsbaren Achsen ist mit Federspeicherbremszylindern ausgestattet, um die entsprechenden Räder zum Feststellen des Sattelaufliegers benutzen zu können. Bei einem Dreiachsaggregat werden beispielsweise zwei Achsen mit Feststellbremsen versehen.

## Patentansprüche

1. Sattelzug umfassend eine Zugmaschine und einen Sattelauflieger mit einem Mehrachsaggregat mit drei Achsen, wobei eine der Achsen des Mehrachsaggregats als Liftachse oder Lenkachse ausgebildet sein kann, **dadurch gekennzeichnet,**
- **daß** eine Achse des Mehrachsaggregats eine ungebremste Tragachse ist und
- **daß** die gebremsten Achsen des Mehrachsaggregats Scheibenbremsen aufweisen, wobei deren Bremsscheiben zumindest den gleichen wirksamen Reibradius aufweisen, wie die Bremsscheiben des Zugfahrzeugs.

2. Sattelzug gemäß Anspruch 1, **dadurch gekennzeichnet, daß** zumindest die Bremsscheiben und die Bremssattel der bremsbaren Achsen des Mehrachsaggregats baugleich mit den Bremsscheiben und Bremssatteln des Zugfahrzeugs sind.

3. Sattelzug gemäß Anspruch 1 oder 2, **dadurch gekennzeichnet, daß** die von der Zugmaschine am weitesten entfernt liegende Achse des Mehrachsaggregats ungebremst ausgeführt ist.

4. Sattelzug gemäß Anspruch 1, 2 oder 3, **dadurch gekennzeichnet, daß** falls das Mehrachsaggregat eine Liftachse aufweist, diese ungebremst ist.

5. Sattelzug gemäß Anspruch 1, 2 oder 3, **dadurch gekennzeichnet, daß** falls das Mehrachsaggregat eine Lenkachse aufweist, diese ungebremst ist.

6. Sattelzug gemäß Anspruch 1 oder 2, **dadurch gekennzeichnet, daß** alle Teile der Scheibenbremsen des Mehrachsaggregats den Bauteilen der Scheibenbremsen der Zugmaschinen entsprechen.

7. Sattelzug gemäß Anspruch 5, **dadurch gekennzeichnet, daß** die Scheibenbremsen pneumatisch betätigt sind.

8. Sattelzug gemäß Anspruch 1, **dadurch gekennzeichnet, daß** mindestens eine der gebremsten Achsen zusätzlich als Feststellbremse ausgebildet ist.

9. Sattelzug gemäß Anspruch 1, **dadurch gekennzeichnet, daß** das Mehrachsaggregat einzelradbereift ist.

## Claims

1. An articulated vehicle comprising a tractor and a semi-trailer having a multi-axle unit with three axles, it being possible to design one of the axles of the multi-axle unit as a drop axle or a steering axle,
**characterised in that**
- one axle of the multi-axle unit is an unbraked carrying axle and
- the braked axles of the multi-axle unit have disc brakes, their brake discs having at least the same effective friction radius as the brake discs on the tractor vehicle.

2. An articulated vehicle in accordance with claim 1,
**characterised in that**
at least the brake discs and the brake callipers on the brakeable axles of the multi-axle unit are of the same construction as the brake discs and brake callipers on the tractor vehicle.

3. An articulated vehicle in accordance with claim 1 or 2,
**characterised in that**
the axle of the multi-axle unit positioned furthest away from the tractor is of unbraked design.

4. An articulated vehicle in accordance with claim 1, 2 or 3,
**characterised in that**
if the multi-axle unit has a drop axle, this axle is unbraked.

5. An articulated vehicle in accordance with claim 1, 2 or 3,
**characterised in that**
if the multi-axle unit has a steering axle, this axle is unbraked.

6. An articulated vehicle in accordance with claim 1 or 2,
**characterised in that**
all parts of the disc brakes on the multi-axle unit correspond to the components of the disc brakes on the tractor.

7. An articulated vehicle in accordance with claim 5,
**characterised in that**
the disc brakes are pneumatically actuated.

8. An articulated vehicle in accordance with claim 1,
**characterised in that**
at least one of the braked axles is also designed with a parking brake.

9. An articulated vehicle in accordance with claim 1,
**characterised in that**
all the wheels on the multi-axle unit are individually tired.

## Revendications

1. Semi-remorque comprenant un véhicule tracteur et une remorque avec un ensemble multiessieux comprenant trois essieux, l'un des essieux de l'ensemble multiessieux pouvant être réalisé sous la forme d'essieu levable ou d'essieu directeur, **caractérisé**
- **en ce qu'**un essieu de l'ensemble multiessieux est un essieu porteur non traîné et
- **en ce que** les essieux freinés de l'ensemble multiessieux présentent des freins à disques, leurs disques de frein présentant au moins le même rayon de frottement actif que les disques de frein du véhicule tracteur.

2. Semi-remorque selon la revendication 1, **caractérisé en ce qu'**au moins les disques de frein et les étriers de frein des essieux pouvant être freinés de l'ensemble multiessieux sont de conception identique aux disques de frein et étriers de frein du véhicule tracteur.

3. Semi-remorque selon la revendication 1 ou 2, **caractérisé en ce que** l'essieu, le plus éloigné du véhicule tracteur, de l'ensemble multiessieux est réalisé non freiné.

4. Semi-remorque selon la revendication 1, 2 ou 3, **caractérisé en ce que**, si l'ensemble multiessieux présente un essieu levable, celui-ci est non freiné.

5. Semi-remorque selon la revendication 1, 2 ou 3, **caractérisé en ce que**, si l'ensemble multiessieux présente un essieu directeur, celui-ci est non freiné.

6. Semi-remorque selon la revendication 1 ou 2, **caractérisé en ce que** toutes les parties des freins à disques de l'ensemble multiessieux correspondent aux composants des freins à disques des véhicules tracteurs.

7. Semi-remorque selon la revendication 5, **caractérisé en ce que** les freins à disques sont actionnés de façon pneumatique.

8. Semi-remorque selon la revendication 1, **caractérisé en ce qu'**au moins l'un des essieux freinés est conçu en supplément comme frein de stationnement.

9. Semi-remorque selon la revendication 1, **caractérisé en ce que** l'ensemble multiessieux est équipé avec des pneus de roue individuels.
